# EUROPEAN PATENT SPECIFICATION

(11) **EP 1 594 661 B1**
(45) Date of publication and mention of the grant of the patent: **17.02.2010**
(21) Application number: 03783022.1
(22) Date of filing: 22.12.2003
(51) Int. Cl.: B25J 17/02, B23Q 1/44

(54) **A PARALLEL KINEMATIC MANIPULATOR AND A METHOD OF OPERATING THE SAME, INCLUDING PAIRWISE ACTUATORS**
MANIPULATOR MIT PARALLELER KINEMATIK UND VERFAHREN ZU DESSEN BETRIEB MIT PAARWEISEN AKTUATOREN
MANIPULATEUR CINEMATIQUE PARALLELE ET PROCEDE DE FONCTIONNEMENT DE CE DERNIER, COMPORTANT DES ACTIONNEURS PREVUS PAR PAIRES

(30) Priority: 20.12.2002 US 434727 P
(43) Date of publication of application: 16.11.2005
(73) Proprietor: ABB AB, 721 83 Västerås (SE)
(72) Inventor: BROGARDH, Torgny, S-724 79 Västerås (SE); LUNDBERG, Ivan, S-168 47 Bromma (SE); WÄPPLING, Daniel, S-722 14 Västerås (SE); FENG, Xiaolong, S-722 46 Västerås (SE); ROBBERTS, Ola, S-754 24 Uppsala (SE); JOHANSSON, Jan, 114 21 Stockholm (SE); FRISK, Martin, S - 172 75 Sundbyberg (SE); PERSSON, Jan-Gunnar, S-184 63 Åkersberga (SE)
(86) International application number: PCT/SE2003/002056
(87) International publication number: WO 2004/056538

(56) References cited:
- WO-A1-03/059581
- DE-A1- 19 710 171
- US-A- 6 047 610
- US-A1- 2004 013 509

## Description

### TECHNICAL FIELD

The present invention relates to an industrial robot, including a manipulator and a control unit having means for automatically operating the manipulator. The manipulator comprises a parallel kinematic manipulator including at least three arms, each comprising a link arrangement. The three link arrangements together carry, directly or indirectly, a working platform member arranged to execute the function aimed at.

The determination "parallel kinematic manipulator", PKM, is defined as a manipulator comprising a first stationary element, a second movable element (platform) and at least three arms. Each arm comprises a supporting first arm part and a second arm part, the latter consisting of a link arrangement connected to the movable platform. Each first arm part is actuated by a driving means preferably arranged on the stationary element to reduce the moving mass. These link arrangements transfer forces due to actuation of the supporting first arm parts when manipulating the movable platform.

### BACKGROUND OF THE INVENTION

The well-known robot type named SCARA robot is a serial kinematic manipulator primarily used for moving and rotating objects without changing the inclination of the objects. The manipulator comprises kinematic links coupled in series. These robots normally have four degrees of freedom in the x, y-, z- directions and ϕ_{z} (rotation of the object about an axis parallel to the z-axis). For manipulating the object in the xy-plane, two arms coupled in series and working in the xy-plane are used. In order to achieve a movement in the z-direction a linear movement device is used. This device is arranged either after the arms coupled in series or before the arms coupled in series. In the first case the arms coupled in series must move the drive assembly for the z-movement and in the latter case the drive assembly for the z-movement must move the arms coupled in series. The drive assembly for the ϕ_{z}-movement will always be located at the extreme end of the kinematic chain of the robot.

Several of the properties concerning the SCARA-robot are improved with a robot, which manipulates an object through working in parallel, i.e. a parallel kinematic manipulator, PKM. According to the statements above, a serial kinematic robot comprises a large mass and thus becomes compliant with low mechanical natural frequencies, the accuracy is limited and large motor torques are required for accomplishing high acceleration, jerk and speed movements possible.

A parallel kinematic robot is a design offering a high degree of load capacity, high stiffness, high natural frequencies and low weight. Three arms working in parallel are required to obtain manipulation of a platform in three degrees of freedom, i.e. the x, y and z-directions in a Cartesian system of coordinates. Six arms working in parallel are required to obtain manipulation of a platform in all six degrees of freedom, i.e. the x, y, z directions and the rotation angle /inclination of an object arranged on the platform.

Ideally, an object ought to be manipulated by a total of six separate links, which transfer only compressive and tensile forces to the manipulated object to obtain a stiff and accurate manipulation. Generally, the PKM comprises three up to six first arm parts. As an example, a manipulator with four arms designed for four degrees of freedom has second arm parts sharing the six separate links. This is only possible with certain combinations of the links, as for example, 2/2/1/1 or 3/1/1/1. 2/2/1/1 means that two supporting first arm parts are connected to the respective second arm part, which comprises two links and another two supporting first arm parts are connected to the respective second arm part, which comprises a single link.

A known manipulator is manipulating a platform, which remains with unchanged inclination in the whole working area. The robot has three supporting first arm parts, each connected to a second arm part, in kinematic parallelism. From this robot, it is known to arrange a total of six links optionally distributed on three first arm parts according to the combinations 2/2/2 or 3/2/1.

A known device for relative movement of a first element in relation to a second element according to the combination 2/2/2 is disclosed in the international application WO 99/58301. The three arms each comprise a supporting first arm part connected to a second arm part, which includes a link arrangement. The first element is described as stationary and the second element is manipulated in the x-, y- and z-direction by driving means. Each link arrangement is connected to a supporting first arm part and to the second element, respectively, by means of joints of 2 or 3 degrees of freedom. Each driving means comprises a stationary portion and a rotating portion, where the stationary portion is included in the first, stationary element. Using the reference numbers in the document, each driving means has its rotating portion connected to the first arm parts 6, 7 and 8. The driving means 3 is pivoting the first arm part 6 and the driving means 4 is pivoting the first arm part 7 about the same geometrical axis 37. The third driving means 5 is pivoting the first arm part 8 about a geometrical axis 38, which is non-parallel to the pivoting axis 37. The third driving means 5 implies that upon pivoting of the supporting arm part 7 by means of the driving means 4 also the supporting arm part 8 will accompany as a consequence of the fact that an axis 53 and also a gear wheel 10 will accompany the pivoting movement. Thus, the driving means 4 and 5 must accelerate more and are more heavily loaded compared with the driving means 3. Consequently, this manipulator design necessitates three different driving means designs with three different drive dimensions. This makes the design more complicated and the manipulator relatively expensive to process. Another consequence is that the first driving means carries the highest moment of inertia and there will be an uneven distribution of the moment of inertia in the manipulator. Moreover, the mechanical natural frequencies will be lower because of the extra mass that axis 2 has to rotate, which gives a less accurate control at higher motion frequencies.

A device for relative movement of a first and a second element according to the second combination 3/2/1 is disclosed in the international application WO 97/33726. The device comprises a manipulator including three arms each arranged to connect a stationary and a movable platform. Each arm comprises a supporting first arm part and a second arm part connected to each other, where respective second arm part comprises a link arrangement. Three actuators are fixed to the stationary platform and actuate one first arm part each. A first supporting arm part is connected to a second arm part linkage arrangement comprising three links in parallel. Another first arm part is connected to a double link arrangement and still another first arm part is connected to a single link, where all links are connected to the movable platform.

The document US 5,539,291 shows a parallel kinematic manipulator. A stand sustains a biaxial controllable supporting arm part. This arm part supports, in its turn, a second arm part, which sustains a movable object. A first and a third supporting arm pivoting around a common pivot axle are connected to the movable object via outer arms comprising belts with the function of a combination between an arm part and a four linkage. The outer arms and the second supporting arm are arranged to transmit compressive and tensile forces as well as torsion moments. The result is a relatively bulky design of a manipulator with a limited operating volume. Moreover, the shown manipulator comprises less stiffness, lower accuracy and much lower mechanical natural frequencies when compared with a manipulator comprising arm parts transmitting only compressive and tensile forces.

The document US 6,047,610 discloses a robotic hybrid serial/parallel manipulator comprising a base platform, upon which two five-bar linkages are mounted on rotatable base linkages. The two linkages are connected to a movable platform and they are rotatably mounted on the rotatable base linkage, thereby achieving five degrees of freedom of the movable platform, three of translation and two of rotation.

Document DE-A-19 710 171 discloses an industrial robot and a method according to the preambles of claim 1 and 13 respectively.

### SUMMARY OF THE INVENTION

The above drawbacks are according to a first aspect of the invention solved in an industrial robot having the features as defined in claim 1.

According to a feature of the invention, the first actuator is adapted to linear movement. According to a feature of the invention, the third articulated arm comprises a joint attached to the movable platform. According to a feature of the invention, the joint is attached in line with joints connecting the articulated arm part and the movable platform. According to a feature of the invention, the joint is attached in line with joints connecting the articulated arm part to the movable platform.

The above drawbacks are according to a second aspect of the invention solved in a method as defined in claim 9.

Preferred embodiments are defined in the dependent claims.

The above problem is according to a third aspect of the invention solved in an use of an industrial robot according to any of claims 1-8 to perform the method according to any of claim 9-14 for accurate compensation of its movements due to the movements of the stationary platform, where the stationary platform is arranged on a ship, see claim 15.

In many contexts, for example when mounting gearboxes, cleaning castings, machining engine blocks, grinding turbine blades and vehicle propellers, aligning rockets in coast corvettes, and aligning body parts in orthopedic operations, a robot having five degrees of freedom is required, wherein the two degrees of freedom for orientation only need to have a working range of ± 45 degrees. In these cases, it is then advantageous not to introduce a separate wrist in a parallel-kinematic robot but to be able to manipulate all the degrees of freedom with the parallel-kinematic mechanism. This results in a much lighter robot structure and eliminates all the problems that may arise in having electric motor operation in the vicinity of the object that is to be manipulated. Because of the lighter robot structure, less driving moment is required in the actuators, which provides a lighter robot and increased personal safety due to a smaller movable mass. The smaller movable mass also permits the robot to be manipulated more quickly and with higher precision and, for example during assembly applications, a much more efficient force control may be achieved. The absence of motors in the vicinity of the manipulated object for orientation thereof enables the robot to work in severe environments, for example in a marine environment or in a foundry environment, and facilitates arranging it for a sterile robot environment in a hospital environment.

In a complete parallel-kinematic robot, a platform is manipulated with six articulated rods, each of which only transmits forces in an axial direction (no bending moments or torsional movements are obtained in the articulated rods). To manipulate the position of the platform, the articulated rods are connected in groups to three actuators, either with two articulated rods in each group (2/2/2 configuration) or with three articulated rods in a fist group, two in a second group and one in a third group (3/2/1 configuration). To also manipulate, at the same time, two orientation angles of the platform, four groups are required with one actuator for each group, and a 2/1/1/1/1 configuration is obtained. For actuators with pivoting arms, five arms are then required, where each arm is connected to one group of articulated rods. However, the large number of arms will result in the robot becoming high and difficult to use in, for example, marine applications or in operating theatres. To circumvent this problem, pairwise actuators are instead introduced according to the device described in this patent application, said actuators both positioning and angularly adjustting an actuator platform on which a group of articulated rods is mounted. In their simplest form, the actuators that are used for positioning and that drive groups of two or more articulated rods are supplemented with a rotating actuator which has its axis of rotation essentially perpendicular to the swinging plane that is stretched up/created by two of the articulated rods included in the group in question. This will cause the supplementary actuator to parallel-displace two articulated rods relative to each other, hence giving rise to a change in orientation of the manipulated platform.

The control includes a kinematic model of the robot with five degrees of freedom. With this model, the actuator positions (or actuator angles) are calculated as a function of position and orientation of the tool that is mounted on the movable platform. In one program, they are given positions and orientations which the tool is to assume when, for example, milling an engine block for a car. Between these programmed positions with associated orientations, a path for the position and orientation of the tool, with a resolution of 0.01 seconds, is interpolated. With the aid of the kinematic model, the corresponding actuator positions and/or actuator angles are then calculated and supplied to the servo of each actuator as position references, and by using reference filters and optimum servo algorithms, the tool will carry out its work with a high precision. In addition to a kinematic model, also a dynamic model is required for control of acceleration and deceleration ramps so that the servo reference will always be possible to track with the installed. Furthermore, in force control, an external Cartesian servo pool is required, which ensures that the tool applies the force against the work object that is required for accurate material cutting.

By accurate control of position and orientation of the tool or object that is handled by the robot, different operations can be carried out with high precision and speed. If, in addition, a six-axis force sensor is mounted between the tool/object and the manipulated platform, force and moment can be controlled for precision with respect of 5 DOF force/torque between the tool and the work object. During mounting, this may be used for rapidly sensing the forces and moments that act between, for example, two parts of a gearbox during mounting thereof. These forces and moments may then be rapidly used to give the two parts the correct relative motions for a quick mounting. During machining, the high stiffness of the robot may be directly utilized, for example, for milling a plane of an engine block for a car without the robot yielding to the tool forces. If the robot is used for picking up and aligning a rocket in, for example, a corvette, the robot may be both accurately positioned in the pick-up position and accurately position and orient in the firing position. In addition, because of its stiffness and small movable mass, the robot may accurately compensate its movements for the movements of the ship caused by heavy sea.

As mentioned above, this solution will be more compact, and the weakness in two extra arms for the tilting need not be taken into consideration in the case of a robot having arms. In addition, the introduction of mechanical end-position stops and limit switches for shafts axes 4 and 5 will be facilitated. A further advantage is that the working range will be somewhat larger when there is a risk of collision between actuator arms and articulated rods in the case of an arm robot. In the case of a linear robot, the solution will also be less expensive since a rotational actuator is less expensive to install than an extra linear shaft which must have a full working range plus an extra range for tilting in the end positions.

### BRIEF DESCRIPTION OF THE DRAWINGS

Figure 1a is a parallel kinematic manipulator according to the invention obtaining five degrees of freedom,
Figure 1b and 1c, respectively is a system of coordinates,
Figure 2 is the robot I Fig. 1 with an alternative group of articulated links,
Figure 3 is a parallel kinematic manipulator according to the invention obtaining six degrees of freedom,
Figure 4 is a PKM according to the invention comprising linear actuators,
Figure 5 is an alternative parallel kinematic manipulator according to the invention,
Figure 6 is the robot in Figure 5 with a changed tilt angle,
Figure 7 is the robot in Figure 5 with a changed tilt angle,
Figure 8-14 shows the movement pattern of the robot in Figure 15a and 15b, respective is an alternative parallel kinematic manipulator comprising four actuators.

### DESCRIPTION OF THE PREFERRED EMBODIMENTS

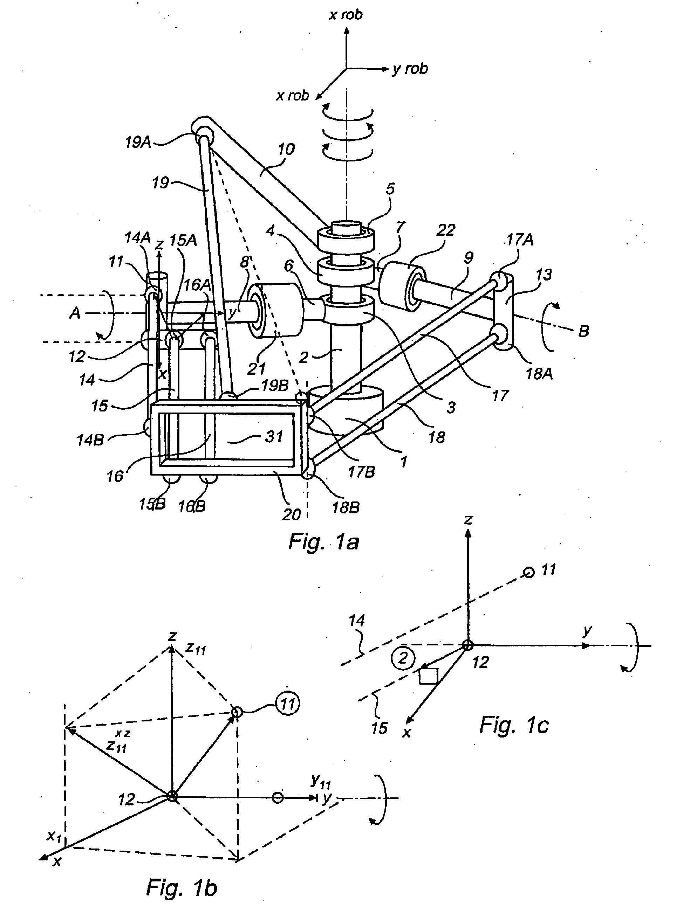

Figure 1a shows a first version of the parallel-kinematic structure covered by the invention. For positioning the movable platform 20, three parallel connecting structures are used, which are driven by three arms mounted on the rotating actuators 3, 4 and 5. These actuators are fixedly mounted on a central column 2 fixed in a floor with the foot 1. The robot may also be turned upside down, whereby the foot is mounted nearest actuator 5. Actuator 3 pivots the arm 6, on which a fourth actuator 21 is mounted. This actuator may rotate the outer arm part 8 about an axis A substantially concentric with the arm parts 6 and 8. When the arm part 8 is rotated, elements 11 and 12 will pivot. This pivoting motion causes the link 14 to move relative to the links 15 and 16. The link 14 is mounted on the element 11 with a joint 14A having at least two degrees of freedom and the links 15 and 16 are mounted on the element 12 with the joints 15A and 16A, which also have at least two degrees of freedom each. At their other ends, the links 14, 15 and 16 are mounted on the movable platform 20 with the joints 14B, 15B and 16B, which also have at least two degrees of freedom. With this arrangement, rotations of the arm part 8 with the aid of the actuator 21 will give rise to tilting of the platform 20. In a corresponding way, rotations of the arm part 9 with the actuator 22 about an axis B will cause tilting of the platform 20, but about another tilt axis. Actuator 22 is mounted on the arm part 7, which is rotated around the column 2 by actuator 4. On the arm part 9 the element 13 is mounted, on which the joints 17A and 18A are fixed. At their other ends, the links 17 and 18 are mounted on the platform 20 via the joints 17B and 18B. Also the joints 17A, 17B, 18A and 18B have at least two degrees of freedom. Finally, actuator 5 is used for rotating the arm 10, which is connected to the platform 20 via the joint 19A, the link 19 and the joint 19B. A favourable embodiment is for all the B joints to have two degrees of freedom for pivoting the links in all directions and for all the A joints to have three degrees of freedom.

Since actuator 21 tilts the platform 20 about a tilt axis and actuator 22 tilts it about another tilt axis, these two actuators will make possible tilting of the platform about an arbitrary axis within the tilt working range. This working range is limited by the link geometry and may reach ± 45 degrees.

The joint 19B is as an alternative attached to the platform 20 in line with the joints 17B and 18B or in line with the joints 14B and 15B. Each of the alternatives gives a well defined reorientation around the Z-axis of the robot.

Figure 1b is a system of coordinates attached on the first arm 6 in Figure la. The X-axis coincides with the link 14, the Y-axis coincides with the axis of rotation of actuator 21 and the Z-axis coincides with the element 11. To make the tilting possible, the link geometry must be arranged such that the element 11 is projectable in the XZ-plane.

Figure 1c is the same system of coordinates as in Figure 1b showing the links 14 and 15. To make the tilting possible, the link geometry must be arranged such that the element 11 is projectable in the YZ-plane.

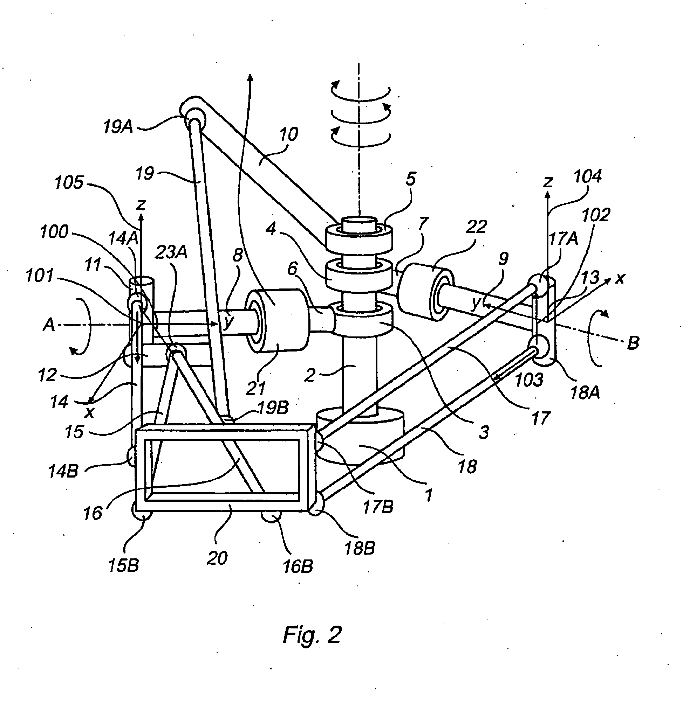

When positioning the platform, the links 15 and 16 will control the orientation of the platform relative to the direction of the element 12. This means that dependence between the orientation of the platform and the angle of actuator 3 is obtained. To reduce this dependence, the link geometry of the links 15 and 16 may be changed so that these links receive a common joint towards the element 12 according to Figure 2. Thus, in this figure, both links 15 and 16 are mounted on the joint 23A with three degrees of freedom. Vectors 100, 101, 102, 103, 104 and 105 are added to the Figure. Otherwise, the structure in Figure 2 is identical with that in Figure 1.

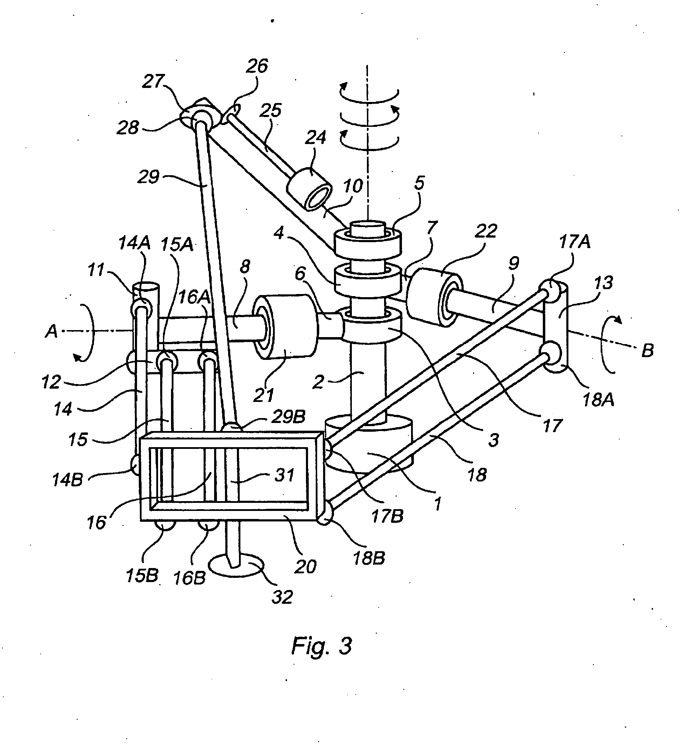

Figure 3 shows the possibility of obtaining six degrees of freedom in the described structure. Here, an actuator 24 is mounted on the arm 10, which actuator, via the shaft 10, the V-gear unit with the gear wheels 27 and 28, the cardan joint 28, the link 29, the cardan joint 29B and the shaft 31, provides an infinite rotational working range for the secondary platform 32. In principle the Figure 3 is a robot comprising one actuator in each arm. The actuator 24 is supposed to be comprised within the arm 10. It is showed on the arm to show the principle.

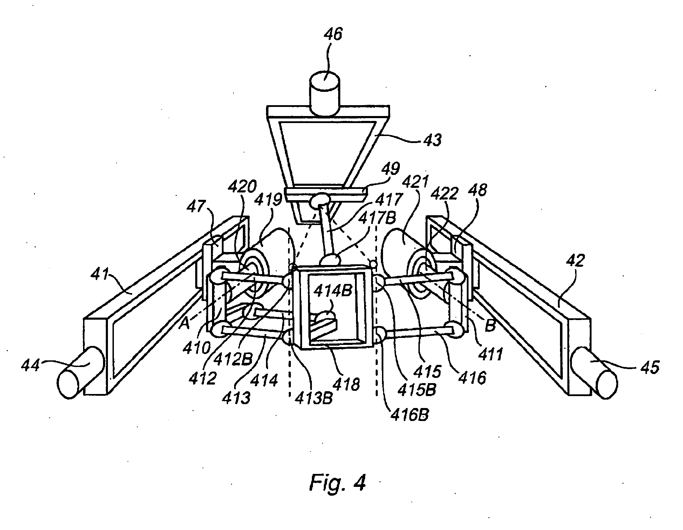

Figure 4 shows how the same concept for tilting the manipulated platform may be used in a parallel-kinematic manipulator with linear actuators for positioning the platform. The manipulator here comprises three linear actuators 41, 42, 43, which may be of direct-drive type or include some form of transmission for transforming a rotating movement of the motors 44, 45 and 46 into linear movements of the vehicles 47, 48 and 49. On the vehicle 41, a rotating actuator 419 is mounted, said actuator via the shaft 420 turning the element 410 so as to obtain a tilting movement of the platform 418 via the links 412, 413 and 414. In a corresponding way, the rotating actuator 421 is mounted on the vehicle 48 and via the shaft 422, the element 411 and the links 415 and 416 the actuator 421 may bring about a tilting movement of the platform 418 but about a different tilt axis. The vehicle 49 is connected via the link 417 to the platform 418 and is used for positioning thereof. With an arrangement according to Figure 3, however, the link 417 may be used for rotating a secondary platform. Because the output shaft of the actuator for this rotation may be aligned in a favourable direction, the V-gear unit with the gear wheels 26 and 27 are not needed in this case. Further, by allowing the links 413 and 414 to share a joint towards the element 410, the same linkage arrangement as in Figure 2 may be obtained.

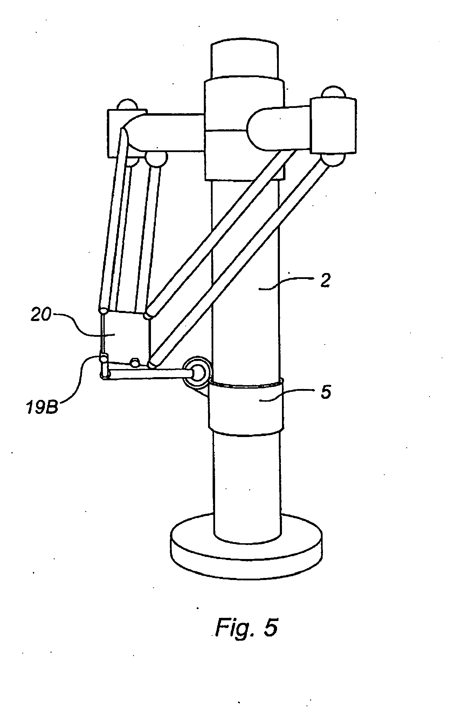

Figure 5 shows a simulation method of the embodiment according to Figure 1 but with actuator 5 mounted at the bottom in the column 2 to obtain a free working range below the roof in an installation for handling rockets in a military marine application. In addition, the joint 19B is mounted in the lower part of the movable platform 20.

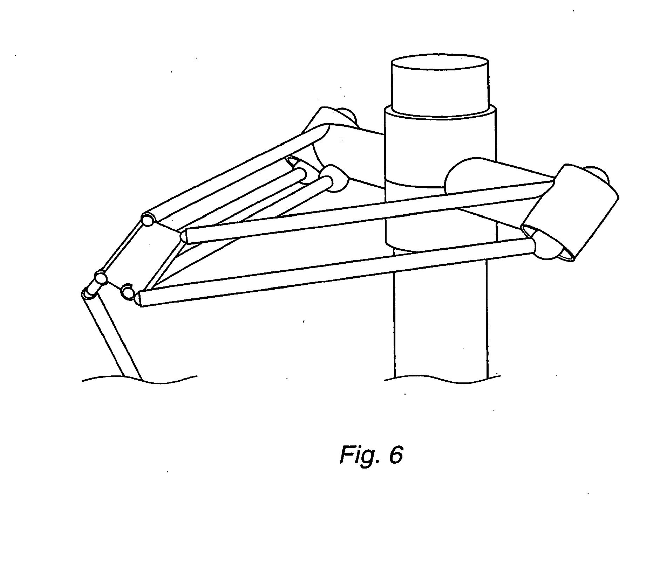

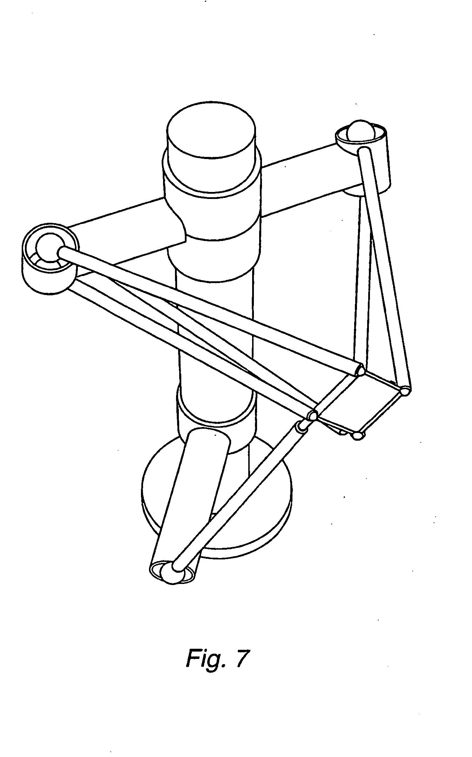

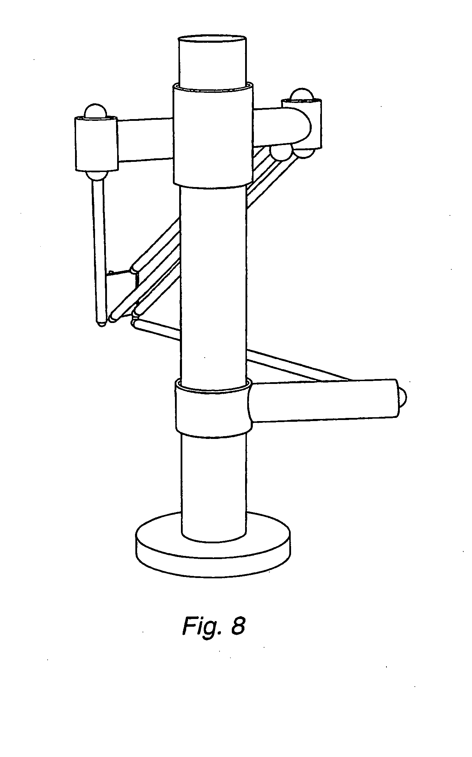

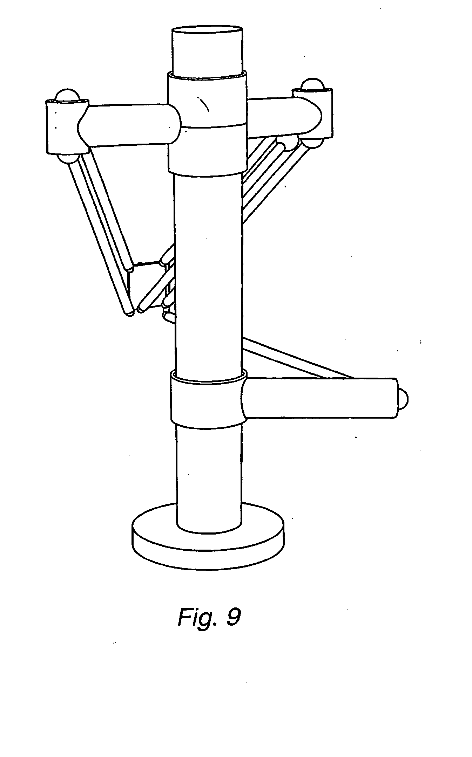

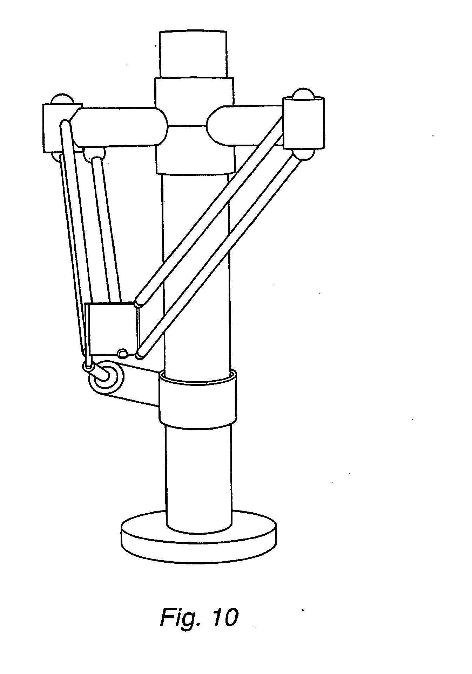

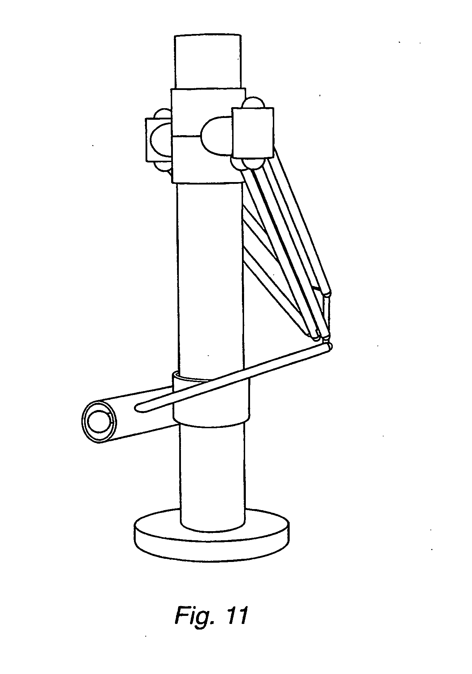

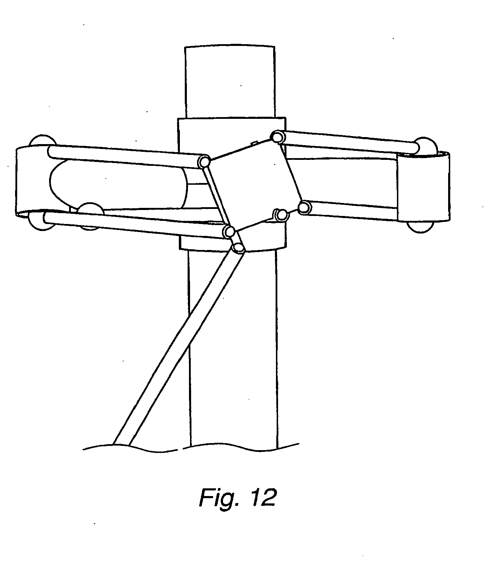

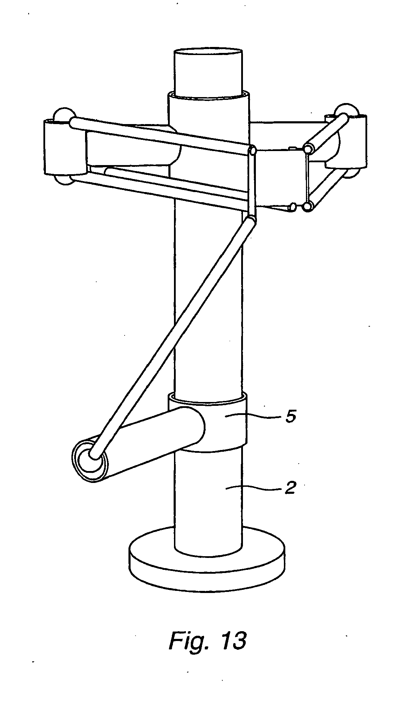

Figures 6 and 7 show the robot at two different tilt angles of the platform. The robot structure is the same as in Figure 5. The movement pattern of the robot according to Figure 5 is illustrated in the Figures 8-14.

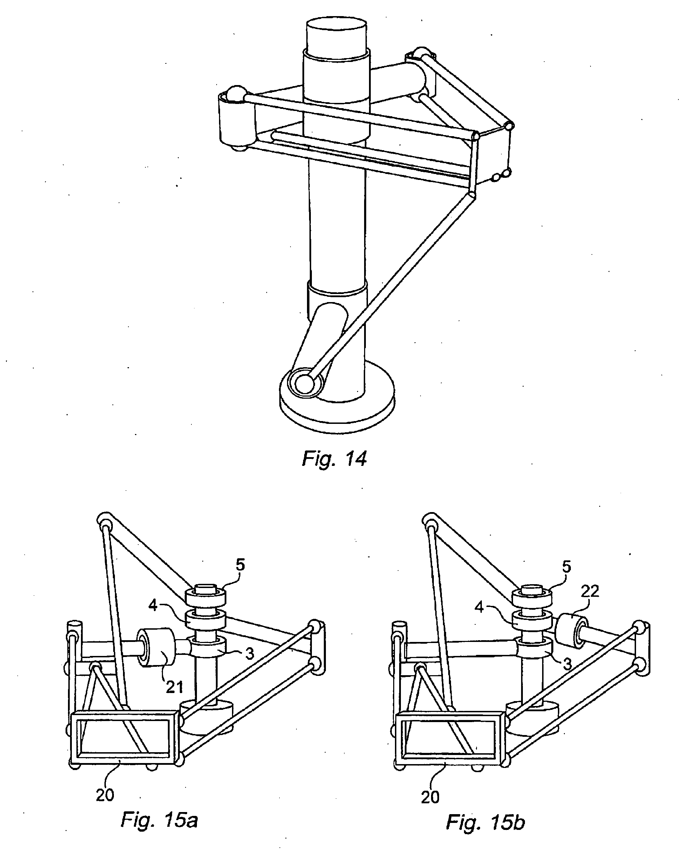

Figure 15a and 15b, respective is an alternative parallel kinematic manipulator comprising four actuators.

## Claims

1. An industrial robot including a parallel kinematic manipulator comprising a stationary platform, a movable platform (20; 418), and three arms connecting the stationary platform with the moveable platform (20; 418), the first arm comprising a first arm part (6; 47) and an articulated second arm part (8; 420), the second arm comprising a first arm part (7; 48) and an articulated second arm part (9; 422), and each arm comprising an actuator (3,4,5; 41,42,43) namely a first, second and third actuator respectively for moving the arm in relation to the stationary platform, wherein the third arm (10; 49) comprises a single link (19; 417) connecting the third arm with the movable platform (20; 418) via respective joints (19A, 19B, 417B) and the first arm part (6; 47) of the first arm comprises an additional, fourth actuator (21; 419) arranged to rotate the articulated second arm part (8; 420) of the first arm around a first axis (A) thereby tilting the platform (20; 418) around a first tilt axis, the first arm part (7; 48) of the second arm is brought to comprise an additional, fifth actuator (22; 421) arranged for rotating the second arm part (9; 422) of the second arm around a second axis (B) thereby tilting the platform (20; 418) around a second tilt axis **characterized in that** the second arm part (8; 420) of the first arm comprises three links (14;15,16; 412,413,414) mounted, at their respective one end, on the second arm part (8; 420) of the first arm via elements (11,12; 410) and respective joints (14A,15A; 23A; 16A) each having at least two degrees of freedom, and mounted, at their respective other end, on the movable platform (20; 418) with respective joints (14B,15B,16B; 412B,413B,414B) each having at least two degrees of freedom; the second arm part (9; 48) of the second arm comprises two links (17,18; 415,416) mounted, at their respective one end, on the second arm part (9; 422) of the second arm via an element (13; 411) and respective joints (17A,18A) each having at least two degrees of freedom and mounted, at their respective other end, on the movable platform (20; 418) with respective joints (17B,18B; 415B,416B) having at least two degrees of freedom and **in that**, upon tilting, the platform (20; 418) is brought to tilt about an arbitrary axis obtaining five degrees of freedom.

2. An industrial robot according to claim 1, wherein the first second and third actuators (3, 4, 5) are adapted to rotating movement.

3. An industrial robot according to claim 2, wherein the first actuator (3) of the first arm (6,8), the first actuator (4) of the second arm (7,9), and the first actuator (5) of the third arm (10) arc arranged with coinciding axis of rotation.

4. An industrial robot according to any of claim 1-3, wherein the third arm (10) comprises an additional, sixth actuator (24).

5. An industrial robot according to claim 4, wherein a secondary platform (32) arranged on the movable platform (20) is adapted to be rotated by the sixth actuator (24).

6. An industrial robot according to claim 1, wherein the first second or third respectively actuator (41,42,43) of the respective arm is adapted to linear movement.

7. An industrial robot, according to claim 1, wherein the joint attaching the third arm to the movable platform is in line with the joints connecting the links of the second arm and the movable platform.

8. An industrial robot, according to claim 1, wherein the joint attaching the third arm to the movable platform is in line with the joints connecting the links of the first arm to the movable platform.

9. A method of operating an industrial robot including a parallel kinematic manipulator comprising a stationary platform, a movable platform (20; 418), and three arms connecting the stationary platform with the moveable platform (20; 418), the first arm comprising a first arm part (6; 47) and an articulated second arm part (8; 420), the second arm comprising a first arm part (7; 48) and an articulated second arm part (9; 422), and each arm comprising an actuator (3,4,5; 41,42,43) namely a first, second and third actuator respectively for moving the arm in relation to the stationary platform, whereby the third arm (10; 49) comprises a single link (19; 417) connecting the third arm with the movable platform (20; 418) via respective joints (19A, 19B) and the first arm part (6; 47) of the first arm comprises an additional, fourth actuator (21; 419) arranged to rotate the articulated second arm part (8; 420) of the first arm around a first axis (A) thereby tilting the platform (20; 418) around a first tilt axis, the first arm part (7; 48) of the second arm is brought to comprise an additional, fifth actuator (22; 421) arranged for rotating the second arm part (9; 422) of the second arm around a second axis (B) thereby tilting the platform (20; 418) around a second tilt axis **characterized in that** the second arm part (8; 420) of the first arm comprises three links (14,15,16; 412,413,414) mounted, at their respective one end, on the second arm part (8; 420) of the first arm via elements (11,12; 410) and respective joints (14A,15A; 23A; 16A) each having at least two degrees of freedom, and mounted, at their respective other end, on the movable platform (20; 418) with respective joints (14B,15B,16B;.412B,413B,414B) each having at least two degrees of freedom; the second arm part (9; 48) of the second arm comprises two links (17,18; 415,416) mounted, at their respective one end, on the second arm part (9; 422) of the second arm via an element (13; 411) and respective joints (17A,18A) each having at least two degrees of freedom and mounted, at their respective other end, on the movable platform (20; 418) with respective joints (178,18B; 415B,416B) having at least two degrees of freedom and **in that**, upon tilting, the platform (20; 418) is brought to tilt about an arbitrary axis obtaining five degrees of freedom.

10. A method according to claim 9, wherein the first actuator (3, 4, 5) of the respective arm is brought to rotational movement.

11. A method according to claim 10, comprising arranging the first actuator (3) of the first arm (6), the first actuator (4) of the second arm (7) and the first actuator (5) of the third arm (10) with coinciding axis of rotation.

12. method according to claim 9, wherein an additional, sixth actuator (24) comprised in the third arm (10) is brought to rotational movement.

13. A method according to claim 12, wherein the sixth actuator (24) is brought to rotate a secondary platform (32) arrange on the movable platform (20) obtaining six degrees of freedom.

14. A method according to claim 9, wherein the first actuator (41,42,43) of the respective arm is brought to linear movement.

15. Use of the industrial robot according to any of claims 1-8 to perform the method according to any of claim 1- 14 for accurate compensation of its movements due to the movements of the stationary platform and where the stationary platform is arranged on a ship.

## Patentansprüche

1. Ein industrieller Roboter beinhaltend einen parallelen kinematischen Manipulator umfassend eine stationäre Plattform, eine bewegliche Plattform (20; 418), und drei Arme, die die stationäre Plattform mit der beweglichen Plattform (20; 418) verbinden, wobei der erste Arm einen ersten Armteil umfasst (6; 47) und einen gelenkigen, zweiten Armteil (8; 420), wobei der zweite Arm einen ersten Armteil (7; 48) und einen gelenkigen, zweiten Armteil (9; 422) umfasst, und jeder Arm umfasst einen Aktuator (3, 4, 5; 41, 42, 43), und zwar jeweils einen ersten, zweiten, und dritten Aktuator, zum Bewegen des Armes in Relation zu der stationären Plattform, wobei der dritte Arm (10; 49) eine einzelne Verbindung (19; 417) umfasst, die den dritten Arm mit der beweglichen Plattform (20; 418) über jeweilige Gelenke (19A, 19B, 417B) verbindet und der erste Armteil (6; 47) des ersten Arms einen zusätzlichen, vierten Aktuator (21; 419) umfasst, der eingerichtet ist, den gelenkigen, zweiten Armteil (8; 420) des ersten Arms um eine erste Achse (A) zu rotieren, wodurch die Plattform (20; 418) um eine erste Neigeachse geneigt wird, wobei der erste Armteil (7; 48) des zweiten Arms dazu veranlasst wird, einen zusätzlichen, fünften Aktuator (22; 421) zu umfassen, der eingerichtet ist, den zweiten Armteil (9; 422) des zweiten Arms um eine zweite Achse (B) zu rotieren, wodurch die Plattform (20; 418) um eine zweite Neigeachse geneigt wird
**dadurch gekennzeichnet, dass** der zweite Armteil (8; 420) des ersten Arms drei Verbindungen (14, 15, 16; 412, 413, 414) umfasst, die an ihren jeweiligen einen Enden an dem zweiten Armteil (8; 420) des ersten Arms durch Elemente (11, 12; 410) und jeweilige Gelenke (14A, 15A; 23A; 16A) montiert sind, wovon jedes zumindest zwei Freiheitsgrade aufweist, und die an ihrem jeweiligen anderen Ende an der beweglichen Plattform (20; 418) mit jeweiligen Gelenken (14B, 15B, 16B; 412B, 413B, 414B) montiert sind, wovon jedes zumindest zwei Freiheitsgrade aufweist; der zweite Armteil (9; 48) des zweiten Arms zwei Verbindungen (17, 18; 415, 416) umfasst, die an ihren jeweiligen einen Enden an dem zweiten Armteil (9; 422) des zweiten Arms durch ein Element (13; 411) und jeweilige Gelenke (17A, 18A) montiert sind, wovon jedes zumindest zwei Freiheitsgrade aufweist, und die an ihrem jeweiligen anderen Ende an der beweglichen Plattform (20; 418) mit jeweiligen Gelenken (17B, 18B; 415B, 416B) mit zumindest zwei Freiheitsgraden montiert sind, und **dadurch** dass, bei Neigung, die Plattform (20; 418) dazu veranlasst wird, sich um eine beliebige Achse zu neigen, fünf Freiheitsgrade erhaltend.

2. Ein industrieller Roboter nach Anspruch 1, wobei die ersten, zweiten und dritten Aktuatoren (3, 4, 5) für eine Drehbewegung angepasst sind.

3. Ein industrieller Roboter nach Anspruch 2, wobei der erste Aktuator (3) des ersten Arms (6, 8), der erste Aktuator (4) des zweiten Arms (7, 9) und der erste Aktuator (5) des dritten Arms (10) mit koinzidierenden Drehachsen eingerichtet sind.

4. Ein industrieller Roboter nach einem der Ansprüche 1 bis 3, wobei der dritte Arm (10) einen zusätzlich, sechsten Aktuator (24) umfasst.

5. Ein industrieller Roboter nach Anspruch 4, wobei eine zusätzliche Plattform (32), die auf der beweglichen Plattform (20) eingerichtet ist, angepasst ist, von dem sechsten Aktuator (24) rotiert zu werden.

6. Ein industrieller Roboter nach Anspruch 1, wobei jeweils der erste, zweite oder dritte Aktuator (41, 42, 43) des jeweiligen Arms für eine lineare Bewegung angepasst ist.

7. Ein industrieller Roboter nach Anspruch 1, wobei das Gelenk, das den dritten Arm an die bewegliche Plattform anschließt, mit den Gelenken ausgerichtet ist, die die Verbindungen des zweiten Arms mit der beweglichen Plattform verbinden.

8. Ein industrieller Roboter nach Anspruch 1, wobei das Gelenk, das den dritten Arm an die bewegliche Plattform anschließt, mit den Gelenken ausgerichtet ist, die die Verbindungen des ersten Arms an der beweglichen Plattform verbinden.

9. Ein Verfahren zum Betreiben eines industriellen Roboters beinhaltend einen parallelen kinematischen Manipulator umfassend eine stationäre Plattform, eine bewegliche Plattform (20; 418), und drei Arme, die die stationäre Plattform mit der beweglichen Plattform (20; 418) verbinden, wobei der erste Arm einen ersten Armteil umfasst (6; 47) und einen gelenkigen, zweiten Armteil (8; 420), wobei der zweite Arm einen ersten Armteil (7; 48) und einen gelenkigen zweiten Armteil (9; 422) umfasst, und jeder Arm umfasst einen Aktuator (3, 4, 5; 41, 42, 43), und zwar jeweils einen ersten, zweiten, und dritten Aktuator, zum Bewegen des Armes in Relation zu der stationären Plattform, wobei der dritte Arm (10; 49) eine einzelne Verbindung (19; 417) umfasst, die den dritten Arm mit der beweglichen Plattform (20; 418) über jeweilige Gelenke (19a, 19b) verbindet und der erste Armteil (6; 47) des ersten Arms einen zusätzlichen, vierten Aktuator (21; 419) umfasst, der eingerichtet ist, den gelenkigen, zweiten Armteil (8; 420) des ersten Arms um eine erste Achse (A) zu rotieren, wodurch die Plattform (20; 418) um eine erste Neigeachse geneigt wird, wobei der erste Armteil (7; 48) des zweiten Arms dazu veranlasst wird, einen zusätzlichen, fünften Aktuator (22; 421) zu umfassen, der eingerichtet ist, den zweiten Armteil (9; 422) des zweiten Arms um eine zweite Achse (B) zu rotieren, wodurch die Plattform (20; 418) um eine zweite Neigeachse geneigt wird,
**dadurch gekennzeichnet, dass** der zweite Armteil (8; 420) des ersten Arms drei Verbindungen (14, 15, 16; 412, 413, 414) umfasst, die an ihren jeweiligen einen Enden an dem zweiten Armteil (8; 420) des ersten Arms durch Elemente (11, 12; 410) und jeweilige Gelenke (14A, 15A; 23A; 16A) montiert sind, wovon jedes zumindest zwei Freiheitsgrade aufweist, und die an ihrem jeweiligen anderen Ende an der beweglichen Plattform (20; 418) mit jeweiligen Gelenken (14B, 15B, 16B; 412B, 413B, 414B) montiert sind; wovon jedes zumindest zwei Freiheitsgrade aufweist; der zweite Armteil (9; 48) des zweiten Arms zwei Verbindungen (17, 18; 415, 416) umfasst, die an ihren jeweiligen einen Enden an dem zweiten Armteil (9; 422) des zweiten Arms durch ein Element (13; 411) und jeweilige Gelenke (17A, 18A) montiert sind, wovon jedes zumindest zwei Freiheitsgrade aufweist, und die an ihrem jeweiligen anderen Ende an der beweglichen Plattform (20; 418) mit jeweiligen Gelenken (17B, 18B; 415B, 416B) mit zumindest zwei Freiheitsgraden montiert sind, und **dadurch**, dass bei Neigung, die Plattform (20; 418) dazu veranlasst wird, sich um eine beliebige Achse zu neigen, fünf Freiheitsgrade erhaltend.

10. Ein Verfahren nach Anspruch 9, wobei der erste Aktuator (3, 4, 5) des jeweiligen Arms zu einer Drehbewegung veranlasst wird.

11. Verfahren nach Anspruch 10, umfassend Anordnen des ersten Aktuators (3) des ersten Arms (6), des ersten Aktuators (4) des zweiten Arms (7) und des ersten Aktuators (5) des dritten Arms (10) mit koinzidierenden Drehachsen.

12. Verfahren nach Anspruch 9, wobei ein zusätzlicher, sechster Aktuator (24), der in dem dritten Arm (10) umfasst ist, zu einer Drehbewegung veranlasst wird.

13. Verfahren nach Anspruch 12, wobei der sechste Aktuator (24) dazu veranlasst wird, eine zusätzliche Plattform (32) zu rotieren, die auf der beweglichen Plattform (20) angeordnet ist, sechs Freiheitsgrade erhaltend.

14. Verfahren nach Anspruch 9, wobei der erste Aktuator (41, 42, 43) des jeweiligen Arms zu einer linearen Bewegung veranlasst wird.

15. Verwendung des industriellen Roboters nach einem der Ansprüche 1 bis 8, um das Verfahren nach einem der Ansprüche 9 bis 14 auszuführen, zur exakten Kompensation seiner Bewegung aufgrund der Bewegungen der stationären Plattform und wobei die stationäre Plattform auf einem Schiff angeordnet ist.

## Revendications

1. Robot industriel comportant un manipulateur cinématique parallèle comprenant une plate-forme fixe, une plate-forme mobile (20 ; 418) et trois bras reliant la plate-forme fixe à la plate-forme mobile (20 ; 418), le premier bras comprenant une première partie de bras (6 ; 47) et une deuxième partie de bras articulée (8 ; 420), le deuxième bras comprenant une première partie de bras (7 ; 48) et une deuxième partie de bras articulée (9 ; 422), et chaque bras comprenant un actionneur (3, 4, 5 ; 41, 42, 43), à savoir respectivement un premier, un deuxième et un troisième actionneur, pour déplacer le bras relativement à la plate-forme fixe, dans lequel le troisième bras (10 ; 49) comprend une liaison simple (19 ; 417) reliant le troisième bras à la plate-forme mobile (20 ; 418) par l'intermédiaire d'articulations respectives (19A, 19B, 417B) et la première partie de bras (6 ; 47) du premier bras comprend un quatrième actionneur, supplémentaire, (21 ; 419) adapté pour faire tourner la deuxième partie de bras articulée (8 ; 420) du premier bras autour d'un premier axe (A) en inclinant ainsi la plate-forme (20 ; 418) autour d'un premier axe de pivotement, la première partie de bras (7 ; 48) du deuxième bras est prévue pour comprendre un cinquième actionneur, supplémentaire, (22 ; 421) adapté pour faire tourner la deuxième partie de bras (9 ; 422) du deuxième bras autour d'un deuxième axe (B) en inclinant ainsi la plate-forme (20 ; 418) autour d'un deuxième axe de pivotement, **caractérisé en ce que** la deuxième partie de bras (8 ; 420) du premier bras comprend trois liaisons (14, 15, 16 ; 412, 413, 414) montées, à leur première extrémité respective, sur la deuxième partie de bras (8 ; 420) du premier bras par l'intermédiaire d'éléments (11, 12 ; 410) et d'articulations respectives (14A ; 15A ; 23A ; 16A) ayant chacune au moins deux degrés de liberté, et montées, à leur autre extrémité respective, sur la plate-forme mobile (20 ; 418) avec des articulations respectives (14B, 15B, 16B ; 412B, 413B, 414B) ayant chacune au moins deux degrés de liberté, la deuxième partie de bras (9 ; 48) du deuxième bras comprend deux liaisons (17, 18 ; 415, 416) montées, à leur première extrémité respective, sur la deuxième partie de bras (9 ; 422) du deuxième bras par l'intermédiaire d'un élément (13 ; 411) et d'articulations respectives (17A, 18A) ayant chacune au moins deux degrés de liberté et montées, à leur autre extrémité respective, sur la plate-forme mobile (20 ; 418) avec des articulations respectives (17B, 18B ; 415B, 416B) ayant au moins deux degrés de liberté, et **en ce que**, lors de l'inclinaison, la plate-forme (20 ; 418) est mise en pivotement autour d'un axe arbitraire obtenant cinq degrés de liberté.

2. Robot industriel selon la revendication 1, dans lequel les premier, deuxième et troisième actionneurs (3, 4, 5) sont adaptés à un mouvement de rotation.

3. Robot industriel selon la revendication 2, dans lequel le premier actionneur (3) du premier bras (6, 8), le premier actionneur (4) du deuxième bras (7, 9) et le premier actionneur (5) du troisième bras (10) sont placés avec leurs axes de rotation en coïncidence.

4. Robot industriel selon l'une quelconque des revendications 1 à 3, dans lequel le troisième bras (10) comprend un sixième actionneur, supplémentaire, (24).

5. Robot industriel selon la revendication 4, dans lequel une plate-forme secondaire (32) placée sur la plate-forme mobile (20) est adaptée pour être mise en rotation par le sixième actionneur (24).

6. Robot industriel selon la revendication 1, dans lequel le premier, le deuxième ou le troisième actionneur respectivement (41, 42, 43) du bras respectif est adapté au mouvement linéaire.

7. Robot industriel selon la revendication 1, dans lequel l'articulation reliant le troisième bras à la plate-forme mobile est alignée avec les articulations reliant les liaisons du deuxième bras et de la plate-forme mobile.

8. Robot industriel selon la revendication 1, dans lequel l'articulation reliant le troisième bras à la plate-forme mobile est alignée avec les articulations reliant les liaisons du premier bras à la plate-forme mobile.

9. Procédé de mise en oeuvre d'un robot industriel comportant un manipulateur cinématique parallèle comprenant une plate-forme fixe, une plate-forme mobile (20 ; 418) et trois bras reliant la plate-forme fixe à la plate-forme mobile (20 ; 418), le premier bras comprenant une première partie de bras (6 ; 47) et une deuxième partie de bras articulée (8 ; 420), le deuxième bras comprenant une première partie de bras (7 ; 48) et une deuxième partie de bras articulée (9 ; 422), et chaque bras comprenant un actionneur (3, 4, 5 ; 41, 42, 43), à savoir respectivement un premier, un deuxième et un troisième actionneur, pour déplacer le bras relativement à la plate-forme fixe, dans lequel le troisième bras (10 ; 49) comprend une liaison simple (19 ; 417) reliant le troisième bras à la plate-forme mobile (20 ; 418) par l'intermédiaire d'articulations respectives (19A, 19B) et la première partie de bras (6 ; 47) du premier bras comprend un quatrième actionneur, supplémentaire, (21 ; 419) adapté pour faire tourner la deuxième partie de bras articulée (8 ; 420) du premier bras autour d'un premier axe (A) en inclinant ainsi la plate-forme (20 ; 418) autour d'un premier axe de pivotement, la première partie de bras (7 ; 48) du deuxième bras est prévue pour comprendre un cinquième actionneur, supplémentaire, (22 ; 421) adapté pour faire tourner la deuxième partie de bras (9 ; 422) du deuxième bras autour d'un deuxième axe (B) en inclinant ainsi la plate-forme (20 ; 418) autour d'un deuxième axe de pivotement, **caractérisé en ce que** la deuxième partie de bras (8 ; 420) du premier bras comprend trois liaisons (14, 15, 16 ; 412, 413, 414) montées, à leur première extrémité respective, sur la deuxième partie de bras (8 ; 420) du premier bras par l'intermédiaire d'éléments (11, 12 ; 410) et d'articulations respectives (14A ; 15A ; 23A ; 16A) ayant chacune au moins deux degrés de liberté, et montées, à leur autre extrémité respective, sur la plate-forme mobile (20 ; 418) avec des articulations respectives (14B, 15B, 16B ; 412B, 413B, 414B) ayant chacune au moins deux degrés de liberté, la deuxième partie de bras (9 ; 48) du deuxième bras comprend deux liaisons (17, 18 ; 415, 416) montées, à leur première extrémité respective, sur la deuxième partie de bras (9 ; 422) du deuxième bras par l'intermédiaire d'un élément (13 ; 411) et d'articulations respectives (17A, 18A) ayant chacune au moins deux degrés de liberté et montées, à leur autre extrémité respective, sur la plate-forme mobile (20 ; 418) avec des articulations respectives (17B, 18B ; 415B, 416B) ayant au moins deux degrés de liberté, et **en ce que**, lors de l'inclinaison, la plate-forme (20 ; 418) est mise en pivotement autour d'un axe arbitraire obtenant cinq degrés de liberté.

10. Procédé selon la revendication 9, dans lequel le premier actionneur (3, 4, 5) du bras respectif est mis en mouvement rotatif.

11. Procédé selon la revendication 10, comprenant le fait de placer le premier actionneur (3) du premier bras (6), le premier actionneur (4) du deuxième bras (7) et le premier actionneur (5) du troisième bras (10) avec leurs axes de rotation en coïncidence.

12. Procédé selon la revendication 9, dans lequel un sixième actionneur, supplémentaire, (24) compris dans le troisième bras est mis en mouvement rotatif.

13. Procédé selon la revendication 12, dans lequel le sixième actionneur (24) est prévu pour faire tourner une plate-forme secondaire (32) placée sur la plate-forme mobile (20) obtenant six degrés de liberté.

14. Procédé selon la revendication 9, dans lequel le premier actionneur (41, 42, 43) du bras respectif est mis en mouvement linéaire.

15. Utilisation du robot industriel selon l'une quelconque des revendications 1 à 8 pour exécuter le procédé de l'une quelconque des revendications 9 à 14 pour la compensation précise de ses mouvements dus aux mouvements de la plate-forme fixe et où la plate-forme fixe est placée sur un navire.
